# FASCICULE DE BREVET EUROPEEN

(11) **EP 4 591 027 B1**
(45) Date de publication et mention de la délivrance du brevet: **20.05.2026**
(21) Numéro de dépôt: 23786638.9
(22) Date de dépôt: 22.09.2023
(51) Int. Cl.: G01B 7/06, G01B 21/04, B29D 30/54

(54) **PROCÉDÉ DE RÉGLAGE D'UN CAPTEUR MAGNÉTIQUE**
VERFAHREN ZUR JUSTIERUNG EINES MAGNETSENSORS
METHOD FOR ADJUSTING A MAGNETIC SENSOR

(30) Priorité: 23.09.2022 FR 2209683
(43) Date de publication de la demande: 30.07.2025
(73) Titulaire: COMPAGNIE GENERALE DES ETABLISSEMENTS MICHELIN, 63000 Clermont-Ferrand (FR)
(72) Inventeur: LUDCHER, Olivier, 63040 CLERMONT-FERRAND CEDEX 9 (FR)
(74) Mandataire: M.F.P. Michelin
(86) Numéro de dépôt international: PCT/FR2023/051458
(87) Numéro de publication internationale: WO 2024/062205

(56) Documents cités:
- EP-B1- 1 211 477
- US-A1- 2010 130 099

## Description

### DOMAINE DE L'INVENTION

La présente invention concerne le domaine du recyclage ou du rechapage d'objets à base de caoutchouc et, plus particulièrement encore, de pneumatiques. Plus précisément, la présente invention concerne le réglage d'un capteur magnétique utilisé pour mesurer une distance entre un capteur magnétique et un élément métallique d'un objet à base de caoutchouc.

### ETAT DE LA TECHNIQUE

Un bandage pneumatique, plus communément appelé pneumatique, comprend classiquement une nappe d'armature, plus précisément une nappe d'armature contenant des renforts métalliques noyés dans une couche de gomme d'enrobage. Cette nappe d'armature est entourée d'une bande de roulement faite d'un matériau à base de caoutchouc.

Lors d'un rechapage d'un pneumatique, qui vise à remplacer la bande de roulement usée par une nouvelle, il est procédé à une étape dite de « cardage », qui consiste à usiner (par exemple par ponçage) le pneumatique pour en retirer de la bande de roulement. Lors de cette étape de cardage, on souhaite retirer de la bande de roulement sans aller jusqu'au contact des renforts métalliques de la nappe d'armature, notamment afin de ne pas endommager ladite nappe d'armature.

Pour mettre en œuvre le cardage, il est donc préférable de connaître au préalable l'épaisseur de la bande de roulement résiduelle pour retirer précisément l'épaisseur de bande de roulement juste nécessaire. Afin de réaliser cette mesure d'épaisseur de bande de roulement, certains fournisseurs de machines de rabotage utilisent des capteurs magnétiques à sorties analogiques. Cependant, le réglage de la sensibilité de ces capteurs étant fixe, les mesures d'épaisseur obtenues ne peuvent rester fiables, d'un pneumatique à un autre, qu'à la condition que les pneumatiques concernés présentent tous une densité de renforts métalliques qui soit semblable d'un pneumatique à l'autre. À l'inverse, les inventeurs ont constaté que si l'on cherche à traiter des pneumatiques de structures diverses, qui présentent des variations substantielles de densités de renforts métalliques d'un pneumatique à un autre, alors d'importantes erreurs de mesures peuvent apparaître.

Le document US 2010/0130099 A1 décrit notamment un procédé de polissage ainsi qu'une machine de polissage d'un pneumatique. Le procédé comprend une mesure d'épaisseur entre une surface d'un matériau polymérique et un élément métallique inclus dans le matériau polymérique, le procédé utilisant un capteur magnétique pour mesurer une distance à l'élément métallique, une courbe de référence reliant le signal mesuré à la distance entre l'élément métallique et le capteur étant sélectionnée parmi une pluralité de courbes de calibration en se basant soit sur une caractéristique connue du pneu qui est une taille du pneu, une forme, une référence constructeur soit sur une instruction via un utilisateur. Le document EP 1 211 477 B1 décrit notamment un dispositif pour mesurer le déséquilibre d'un jeu de noyaux ou âmes ferromagnétiques et métalliques dans un ruban de matériau électriquement non conducteur et non ferromagnétique, ainsi qu'un procédé de calibrage des moyens de mesure par induction d'un dispositif pour mesurer le déséquilibre d'un jeu de noyaux métalliques ferromagnétiques à l'intérieur d'un ruban de matériau électriquement non conducteur et non ferromagnétique.

Ainsi, il manque à ce jour une solution pour mesurer précisément l'épaisseur de bande de roulement restante sur un pneumatique.

### EXPOSE DE L'INVENTION

Un but de l'invention est de mesurer précisément, à partir d'un capteur magnétique, l'épaisseur d'une couche à base de caoutchouc d'un objet comprenant également un élément métallique.

Ainsi, un autre but de l'invention vise à permettre un réglage automatique du capteur magnétique adapté à différents types d'objet à base de caoutchouc.

Un autre but de l'invention est de permettre un recyclage ou un ponçage d'un objet à base de caoutchouc et comprenant un élément métallique de manière efficace.

Selon un premier aspect, il est proposé un procédé de réglage d'un capteur magnétique selon la revendication 1.

Selon des caractéristiques avantageuses et non limitatives, prises seules ou dans une quelconque combinaison :
- lors de l'étape (b), on identifie un point d'inflexion sur la courbe de réponse brute, on calcule le coefficient directeur de la tangente à ladite courbe de réponse brute en ce point d'inflexion, et l'on sélectionne la courbe de réponse étalon qui présente un point d'inflexion dont la tangente possède le coefficient directeur qui est le plus proche du coefficient directeur calculé pour la courbe de réponse brute ;
- lors de l'étape (b), on compare des coefficients d'une régression polynomiale de la courbe de réponse brute avec des coefficients de régressions polynomiales des courbes de réponse étalons, et l'on sélectionne la courbe de réponse étalon dont la régression polynomiale présente des coefficients qui sont les plus proches des coefficients de la régression polynomiale de la courbe de réponse brute ;
- lors de l'étape (b), on met en œuvre un traitement d'image de la courbe de réponse brute et des courbes de réponse étalons et on sélectionne la courbe de réponse étalon présentant une similitude maximale avec la courbe de réponse brute ;
- la courbe de réponse étalon et/ou la courbe de réponse corrigée sont exprimées sous forme d'une fonction polynomiale du cinquième degré ;
- les courbes de réponse étalons sont établies à partir d'échantillons d'objets au sein desquels l'élément métallique, dont on souhaite mesurer la distance par rapport au capteur, a été mis à nu, et en prévoyant au moins une mesure de distance par le capteur dans une position dans laquelle ledit capteur se trouve au contact dudit élément métallique, et donc à distance effective nulle dudit élément métallique ;
- les courbes de réponse étalons sont établies en faisant suivre au capteur une trajectoire standardisée identique par rapport à chaque objet de l'un des agencements prédéfinis, ladite trajectoire standardisée étant de préférence normale à une portion de référence prédéfinie de la surface dudit objet, et en ce que, ultérieurement, lors de l'étape (a) d'acquisition de la courbe de réponse brute, les positions successives du capteur sont situées sur cette même trajectoire standardisée ;
- lors de l'étape (b), on construit le modèle de courbe de correction par extrapolation polynomiale à partir de points constitutifs de la courbe de réponse brute ;
- lors de l'étape (b), on construit le modèle de courbe de correction en symétrisant la courbe de réponse brute par rapport à un point d'inflexion de la courbe de réponse brute ;
- lors de l'étape (a), le capteur est déplacé d'une position à l'autre selon une trajectoire rectiligne qui suit une direction sensiblement normale à une portion choisie de la surface de l'objet ;
- lors de l'étape (a), le capteur se trouve au contact de la surface de l'objet, à distance nulle de ladite surface de l'objet, dans l'une des différentes positions qui sont occupées successivement par ledit capteur ;
- lors de l'étape (a), les positions successivement occupées par le capteur sont distantes les unes des autres d'un pas prédéterminé, de préférence égal ou inférieur à 1 mm, et plus préférentiellement égal ou inférieur à 0,2 mm.

Ainsi, selon l'invention, il est proposé un procédé de réglage d'un capteur magnétique configuré pour fournir, sous forme d'un signal de réponse, une mesure d'une distance qui sépare ledit capteur magnétique d'un élément métallique se trouvant dans un objet à base de caoutchouc, tel qu'un élément métallique de renfort présent dans un bandage pneumatique, ledit procédé comprenant :
- une étape (a) d'acquisition d'une première courbe, dite « courbe de réponse brute », au cours de laquelle on place successivement le capteur en différentes positions par rapport à l'objet de sorte que ledit capteur se trouve successivement à différentes distances correspondantes de l'élément métallique, et l'on collecte, en chacune desdites positions, le signal de réponse renvoyé par ledit capteur, de manière à obtenir une courbe de réponse brute qui représente l'évolution du signal de réponse du capteur en fonction de la distance qui sépare ledit capteur de l'élément métallique,

le procédé comprenant, selon une première alternative, :
   - une étape (b) de détermination, à partir de la courbe de réponse brute, d'un modèle de courbe de correction, le modèle de courbe de correction étant une courbe de réponse étalon sélectionnée, à partir d'au moins une caractéristique de la courbe de réponse brute, parmi un ensemble de courbes de réponse étalons préétablies qui représentent, chacune pour un agencement particulier prédéfini d'élément métallique et d'objet, l'évolution du signal de réponse du capteur en fonction de la distance qui sépare ledit capteur de l'élément métallique de l'agencement particulier considéré,
   - une étape (c) de correction, on établit une seconde courbe, dite « courbe de réponse corrigée », en corrigeant la courbe de réponse brute à partir du modèle de courbe de correction en appliquant au signal de réponse de la courbe de réponse brute une fonction réciproque de la courbe de réponse étalon qui a été sélectionnée lors de l'étape (b) de sélection d'une courbe de réponse étalon, et
le procédé comprenant, selon une deuxième alternative :
   - une étape (b) de construction d'un modèle de courbe de correction par extrapolation à partir de points constitutifs de la courbe de réponse brute,
   - une étape (c) de correction, on établit une seconde courbe, dite « courbe de réponse corrigée », en corrigeant la courbe de réponse brute à partir du modèle de courbe de correction en déterminant sur le modèle de courbe de correction la valeur de distance qui sépare le capteur de l'élément métallique correspondant à un signal de réponse du capteur nul et en recalant la courbe de réponse brute de cette valeur de distance.

Selon un autre aspect, il est proposé un procédé de détermination de la distance effective qui sépare un capteur magnétique d'un élément métallique se trouvant dans un objet à base de caoutchouc, le capteur magnétique étant configuré pour fournir, sous forme d'un signal de réponse, une mesure d'une distance qui sépare le capteur magnétique de l'élément métallique comprenant les étapes de :
a) réglage du capteur magnétique par mise en œuvre du procédé de réglage présenté précédemment sur l'objet ;
b) mesure d'une distance qui sépare le capteur magnétique de l'élément métallique sous la forme d'un signal de réponse ;
c) correction de la mesure de distance à partir de la courbe de réponse corrigée pour obtention de la distance effective qui sépare le capteur magnétique de l'élément métallique.

Selon un autre aspect, il est proposé un procédé de calcul de la distance séparant un élément métallique de la surface d'un objet à base de caoutchouc dans lequel se trouve l'élément métallique, comprenant des étapes de :
a) détermination d'une valeur « A » de distance effective entre un capteur magnétique et l'élément métallique par mise en œuvre du procédé de détermination présenté précédemment, le capteur magnétique étant configuré pour fournir, sous forme d'un signal de réponse, une mesure d'une distance qui sépare le capteur magnétique de l'élément métallique ;
b) mesure, par un système de mesure de distance, de la distance « B » entre le système de mesure de distance et la surface de l'objet ;
c) détermination de la distance « C » entre le système de mesure de distance et le capteur magnétique ;
d) calcul de l'épaisseur de gomme par calcul de la formule A+B- C.

Selon un autre aspect, il est proposé un système de calcul de la distance séparant un élément métallique de la surface d'un objet à base de caoutchouc dans lequel se trouve l'élément métallique, ledit système comprenant un capteur magnétique configuré pour mesurer une distance entre l'élément métallique et le capteur magnétique, un système de mesure de distance configuré pour mesurer une distance entre la surface de l'objet et le système de mesure de distance et une unité de traitement de données configurée pour mettre en œuvre le procédé de réglage présenté précédemment.

Selon un autre aspect, il est proposé une machine d'usinage destinée à enlever du caoutchouc sur un objet à base de caoutchouc dans lequel se trouve un élément métallique, ladite machine comprenant un outil d'usinage de l'objet, une unité de commande de l'outil d'usinage et le système de calcul présenté précédemment, l'unité de commande communiquant avec le système de calcul pour commander l'outil d'usinage en fonction de la distance calculée qui sépare l'élément métallique de la surface de l'objet à base de caoutchouc.

### DESCRIPTION DES FIGURES

D'autres caractéristiques et avantages de la présente invention apparaîtront à la lecture de la description qui va suivre d'un mode de réalisation préférentiel. Cette description sera donnée en référence aux figures annexées dont :
- la figure 1 représente un système pour le réglage d'un capteur magnétique ;
- la figure 2 illustre une courbe de réponse brute ;
- la figure 3 illustre des courbes de réponse étalons ;
- la figure 4 représente un système pour le calcul de l'épaisseur d'une couche externe d'un objet à base de caoutchouc ;
- la figure 5 schématise une machine de ponçage comprenant un système pour le réglage d'un capteur magnétique et un système pour le calcul de l'épaisseur d'une couche externe d'un objet à base de caoutchouc ;
- la figure 6 représente les étapes du procédé de réglage ;
- la figure 7 illustre un modèle de courbe de correction obtenu par extrapolation ;
- la figure 8 schématise une méthode pour déterminer une distance effective séparant un capteur magnétique d'un élément métallique d'un objet à base de caoutchouc ;
- la figure 9 schématise une méthode pour recaler un modèle de courbe de correction ;
- la figure 10 représente les étapes d'un procédé de détermination de la distance effective qui sépare un capteur magnétique d'un élément métallique se trouvant dans un objet à base de caoutchouc ;
- la figure 11 représente les étapes d'un procédé de calcul de la distance séparant un élément métallique de la surface d'un objet à base de caoutchouc.

### DESCRIPTION DETAILLEE DE L'INVENTION

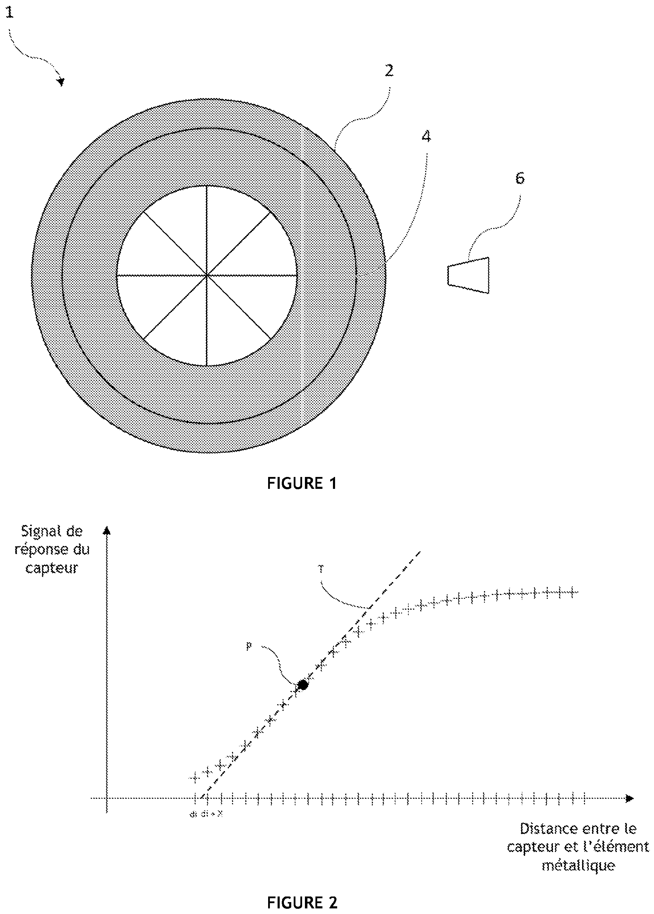

En référence à la figure 1, il est proposé un procédé de réglage d'un capteur magnétique 6 destiné à fournir, sous forme d'un signal de réponse, une mesure d'une distance qui sépare ledit capteur magnétique 6 d'un élément métallique 4 se trouvant dans un objet à base de caoutchouc 1.

De préférence, l'objet à base de caoutchouc 1 est un bandage pneumatique et l'élément métallique 4 est un renfort de l'objet 1 comme une nappe métallique constitutive de l'armature du bandage pneumatique. L'objet 1 peut également être une chenille ou une bande transporteuse pour convoyeur.

La capteur magnétique 6 est de préférence un capteur magnétique à sortie analogique.

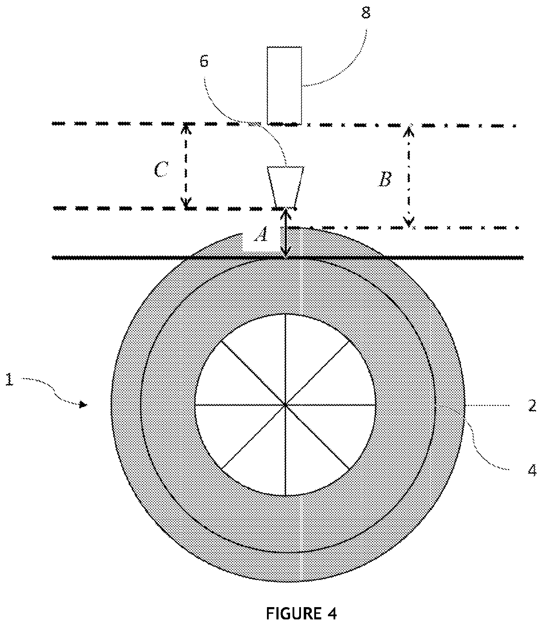

Selon un autre aspect de l'invention, en référence à la figure 4, il est proposé un système de calcul d'une épaisseur d'une couche externe 2 d'un objet en caoutchouc 1 comprenant un élément métallique 4. Avantageusement, le système de calcul permet le calcul de l'épaisseur de gomme d'un bandage pneumatique.

Le système de calcul comprend un capteur magnétique 6 adapté pour mesurer une distance entre l'élément métallique 4 et le capteur magnétique et un système de mesure de distance 8, dit « système auxiliaire de mesure de distance 8 » par la suite, adapté pour mesurer une distance entre la couche externe 2 de l'objet à base de caoutchouc 1 et le système auxiliaire de mesure de distance 8. Le système de calcul comprend en outre une unité de traitement de données configurée pour mettre en œuvre le procédé de réglage du capteur magnétique 6.

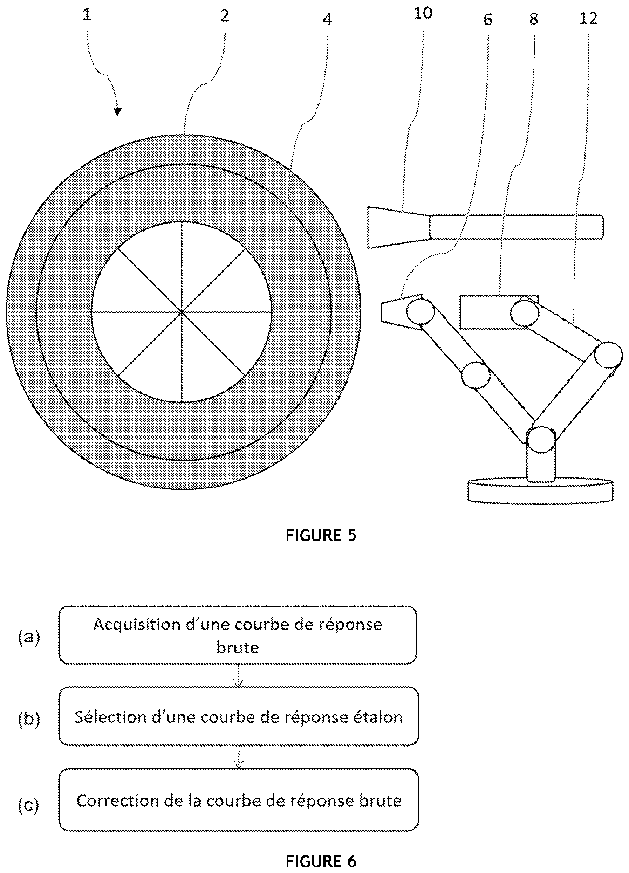

Comme illustré en figure 5, le capteur magnétique 6 et le système auxiliaire de mesure de distance 8 peuvent être maintenus par un bras robot 12. Le capteur magnétique 6 et le système auxiliaire de mesure de distance 8 peuvent ainsi être déplacés grâce au bras robot 12.

Le système auxiliaire de mesure de distance 8 est typiquement un système de mesure laser.

Selon un autre aspect de l'invention, en référence à la figure 5, il est proposé une machine d'usinage d'un objet à base de caoutchouc 1 comprenant un outil d'usinage 10 de la couche externe de l'objet, une unité de commande de l'outil d'usinage 10 et le système de calcul de l'épaisseur de la couche externe. L'unité de commande est configurée pour communiquer avec le système de calcul pour commander l'outil d'usinage 10 en fonction de l'épaisseur de la couche externe calculée.

Avantageusement, la machine est une machine de cardage d'un bandage pneumatique et permet de réaliser l'étape de cardage dans le cadre d'un processus de recyclage ou de rechapage du bandage pneumatique.

On comprend que le système de calcul permet de connaître l'épaisseur de la bande de roulement restante sur le bandage pneumatique. Cette épaisseur calculée permet de déterminer précisément l'épaisseur de bande de roulement qu'il est souhaité de carder. Si l'on s'inscrit dans le cadre d'un recyclage, l'unité de commande commandera l'outil d'usinage pour carder la bande de roulement jusqu'à ce qu'il ne reste très peu de bande de roulement sur l'élément métallique, de préférence 2 mm de bande de roulement. Si l'on s'inscrit dans le cadre d'un rechapage, l'unité de commande commandera l'outil d'usinage pour carder la bande de roulement jusqu'à ce qu'il reste un peu plus de bande de roulement en comparaison au recyclage, par exemple 5,5 mm de bande de roulement.

### Procédés

Il est proposé un procédé de réglage d'un capteur magnétique destiné à fournir, sous forme d'un signal de réponse, une mesure d'une distance qui sépare le capteur magnétique d'un élément métallique se trouvant dans un objet à base de caoutchouc en vue de calculer l'épaisseur d'une couche externe de l'objet à base de caoutchouc. Comme expliqué précédemment, d'un objet à un autre, l'élément métallique est différent et peut donc présenter des caractéristiques différentes. En effet, d'un objet à un autre, le matériau constitutif de l'élément métallique peut différer (et donc la densité, la composition, la perméabilité magnétique...), la quantité (et donc la masse) de l'élément métallique dans l'objet peut différer et l'agencement (et donc la forme, la répartition, la profondeur...) de l'élément métallique dans l'objet peut également différer. En conséquence, un réglage unique du capteur magnétique ne peut pas permettre de mesure correcte. Pour mesurer précisément la distance entre le capteur magnétique et l'élément métallique, il est nécessaire de régler le capteur magnétique de manière adaptée à l'élément métallique et, plus globalement, à chaque objet à traiter.

Cependant, les caractéristiques exactes de l'élément métallique et plus globalement de l'objet ne sont pas forcément connues au moment où l'on souhaite retirer par usinage une épaisseur de caoutchouc de l'objet. Dans le cas, par exemple, d'un bandage pneumatique, l'élément métallique est à l'intérieur du bandage et n'est pas visible. Il n'est parfois pas possible de connaître les caractéristiques de l'élément métallique. Pourtant, il demeure nécessaire de régler le capteur magnétique de manière adaptée à l'élément métallique. Le procédé présenté vient améliorer la situation.

En référence à la figure 6, le procédé comprend une étape a) d'acquisition d'une première courbe, dite « *courbe de réponse brute* ». Pour cela, le capteur magnétique est disposé en regard de l'objet. Dans le cadre d'un bandage pneumatique, le capteur magnétique est disposé en regard de la bande de roulement.

Durant l'étape a), le capteur magnétique est placé successivement en différentes positions par rapport à l'objet de sorte que le capteur se retrouve successivement à différentes distances correspondantes de l'élément métallique. De manière préférée, le capteur magnétique est déplacé d'une position à une autre selon une trajectoire rectiligne qui suit une direction sensiblement normale à une portion choisie de la surface de l'objet. En d'autres termes, dans le cas d'un bandage pneumatique, le capteur magnétique est avantageusement déplacé radialement au bandage pneumatique. Le capteur magnétique peut être déplacé manuellement. De préférence, le capteur magnétique est déplacé mécaniquement par un bras robot. Inversement, le capteur magnétique pourrait être fixe et l'objet pourrait être déplacé par rapport au capteur.

De préférence, le capteur magnétique est dans un premier temps au contact de la surface de l'objet et donc au contact de la surface externe de la couche externe de l'objet. En d'autres termes, le capteur magnétique est à distance nulle de la surface de l'objet. Puis, le capteur magnétique est éloigné progressivement de la surface de l'objet. Selon un mode de réalisation inverse, le capteur magnétique est dans un premier temps éloigné de la surface de l'objet puis est rapproché progressivement de la surface de l'objet jusqu'à atteindre une position selon laquelle le capteur magnétique est au contact de la surface de l'objet. Ceci présente l'avantage d'assurer qu'une plage de distance entre le capteur magnétique et l'élément métallique suffisamment étendue soit parcourue de sorte qu'elle contienne effectivement un point d'inflexion de la courbe de réponse brute. L'intérêt de cela sera compris par lecture de la suite de la présente description. Typiquement, ladite plage de distance est de l'ordre de 1 mm à 30 mm.

En outre, l'unité de traitement de données collecte, en chacune des positions du capteur magnétique, le signal de réponse renvoyé par le capteur magnétique de manière à obtenir la courbe de réponse brute qui représente l'évolution du signal de réponse du capteur magnétique en fonction de la distance qui sépare le capteur de l'élément métallique. La figure 2 illustre une courbe de réponse brute. Les ordonnées correspondent au signal de réponse du capteur magnétique et les abscisses correspondent à la distance qui sépare le capteur de l'élément métallique. On comprend que la valeur absolue des abscisses n'est pas connue car l'on ne connait pas, à ce stade du procédé, la distance réelle entre le capteur magnétique et l'élément métallique. En fait, chaque graduation en abscisse correspond à une distance initiale di + X. La distance initiale di est une distance inconnue séparant le capteur magnétique de l'élément métallique pour la première mesure réalisée par le capteur magnétique sur l'objet considéré. X correspond à l'écart entre la distance initiale et la distance séparant le capteur magnétique de l'élément métallique pour une autre mesure réalisée par le capteur magnétique sur l'objet considéré. X correspond en fait de préférence à un multiple d'un pas auquel le capteur magnétique est avantageusement déplacé entre chaque mesure successive du capteur magnétique. D'ailleurs, de préférence, les positions successivement occupées par le capteur magnétique sont distantes les unes des autres d'un pas prédéterminé, de préférence égal ou inférieur à 1 mm, et plus préférentiellement égal ou inférieur à 0,2 mm.

Dans une étape b) dite de détermination, un modèle de courbe de correction est déterminé à partir de la courbe de réponse brute. Le modèle de courbe de correction est un modèle, typiquement sous la forme d'une courbe. Le modèle de courbe de correction représente de préférence l'évolution d'un signal de réponse d'un capteur magnétique en fonction de la distance qui sépare le capteur d'un élément métallique. Le modèle de courbe de correction est voué à permettre la correction de la courbe de réponse brute comme cela sera décrit par la suite. Le modèle de courbe peut être déterminés selon différents modes de réalisation.

Selon un premier mode de réalisation, dit étalon, le modèle de courbe de correction est une courbe de réponse étalon et l'étape b) comprend la sélection d'une courbe de réponse étalon. Plus précisément, à partir d'au moins une caractéristique de la courbe de réponse brute, une courbe de réponse étalon est sélectionnée parmi un ensemble de courbes de réponse étalons préétablies.

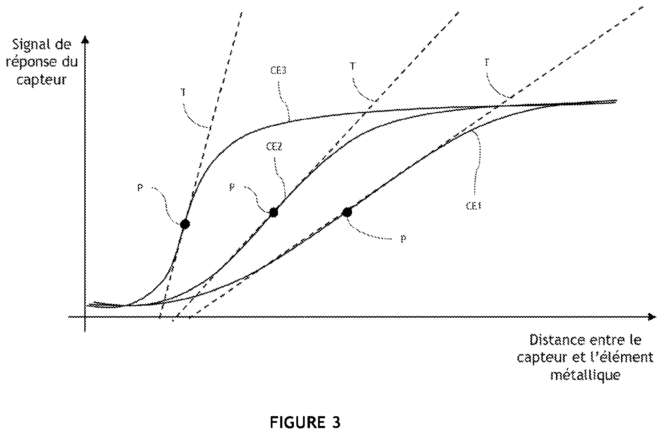

Les courbes de réponse étalons préétablies représentent, chacune pour un agencement particulier prédéfini d'élément métallique et d'objet, l'évolution du signal de réponse du capteur magnétique en fonction de la distance qui sépare le capteur magnétique de l'élément métallique de l'agencement particulier considéré. Des courbes de réponse étalons ainsi que leur point d'inflexion P et leur tangente T en leur points d'inflexion sont illustrés en figure 3. L'agencement particulier d'élément métallique et d'objet englobe, entre autres, le type d'élément métallique et le type d'objet et donc les caractéristiques intrinsèques à l'élément métallique et à l'objet. Par exemple, la figure 3 représente un ensemble de trois courbes de réponse étalons CE1, CE2 et CE3, qui caractérisent respectivement un premier objet O1, un second objet O2 et un troisième objet O3, qui correspondent chacun à un bandage pneumatique, mais qui diffèrent les uns des autres par l'agencement des renforts qui sont présents au sein de leurs nappes d'armature et qui forment les éléments métalliques, ici en acier. À titre d'exemple, non limitatif, le premier objet O1, caractérisé par la première courbe de réponse étalon CE1, pourra correspondre à un bandage pneumatique dont une nappe de renfort présente des renforts métalliques plus épais et/ou plus rapprochés les uns des autres, et donc un réseau d'éléments métalliques plus dense que le réseau des renforts correspondants du deuxième objet O2 caractérisé par la seconde courbe de réponse étalon CE2, deuxième objet O2 qui présente lui-même un réseau d'éléments métalliques de renforts plus dense que celui du troisième objet O3 caractérisé par la troisième courbe de réponse étalon CE3. Ainsi, chaque courbe de réponse étalon préétablie concerne un agencement particulier prédéfini.

De préférence, chaque courbe de réponse étalon a été préalablement établie (i.e. de préférence préalablement à l'étape a)) à partir d'échantillons d'objets au sein desquels l'élément métallique, dont on souhaite mesurer la distance par rapport au capteur, a été mis à nu. En d'autres termes, les courbes de réponse étalons sont établies à partir d'échantillons d'objets dont on a retiré la couche externe de caoutchouc qui recouvre initialement l'élément métallique, afin d'exposer ledit élément métallique, ce qui permet de connaître exactement, matériellement, la distance séparant le capteur magnétique de l'élément métallique. De la sorte, les courbes de réponse étalons représentent l'évolution du signal de réponse du capteur en fonction de la distance séparant le capteur magnétique de l'élément métallique, ladite distance étant connue. Ainsi, les valeurs réelles des abscisses des courbes de réponse étalons sont connues, par rapport à une référence connue, que l'on peut considérer comme une origine absolue de l'axe des abscisses, qui est matérialisée par l'élément métallique mis à nu. Par conséquent, pour chaque mesure de distance séparant le capteur magnétique de l'élément métallique, la distance réelle séparant le capteur magnétique de l'élément métallique est connue.

De préférence, chaque courbe de réponse étalon a été préalablement établie de sorte que pour au moins une mesure de distance par le capteur magnétique, le capteur magnétique est dans une position dans laquelle il se trouve au contact de l'élément métallique, et donc à distance effective nulle de l'élément métallique. Ceci présente l'avantage d'assurer qu'une plage de distance entre le capteur magnétique et l'élément métallique suffisamment étendue soit parcourue de sorte qu'elle contienne effectivement le point d'inflexion de la courbe de réponse étalon. L'intérêt de cela sera compris par lecture de la suite de la présente description. En outre, ceci implique que les courbes de réponse étalons couvrent toute l'étendue utile de mesure, ce qui permettra ensuite de creuser la couche externe jusqu'au plus près de l'élément métallique. Par « étendue utile de mesure », il est entendu une plage de distance entre l'élément métallique et le capteur magnétique s'étendant au moins entre une distance nulle (le capteur magnétique est au contact de l'élément métallique) et la distance égale à l'épaisseur initiale de la couche externe de l'objet. En effet, pour estimer l'épaisseur de la couche externe restante de façon dynamique, au fur et à mesure de l'usinage, afin d'usiner jusqu'au plus près de l'élément métallique mais avec une marge de sécurité suffisante, il faut que le capteur soit capable d'estimer des épaisseurs situées dans cette étendue de mesure utile.

De préférence, les courbes de réponse étalons sont exprimées sous forme d'une fonction polynomiale du troisième ou du cinquième degré. Avantageusement, les courbes de réponse étalons sont exprimées sous forme d'une fonction polynomiale du cinquième degré car cela garantit l'existence d'une dérivée seconde (de degré trois) non constante et non nulle. Ainsi, cette fonction présentera forcément au moins une racine (de surcroît calculable par une formule exacte) ce qui garantit que la fonction, et donc la courbe de réponse étalon, présente un point d'inflexion à cette fonction.

De préférence encore, un même capteur magnétique est utilisé pour réaliser les courbes de réponse étalons selon les différents agencements prédéfinis d'élément métallique et d'objet et pour l'étape (a) d'acquisition de la courbe de réponse brute. À cet effet, on pourra soit, selon une première possibilité de mise en œuvre, utiliser un premier capteur magnétique pour réaliser les courbes de réponse étalons puis un second capteur magnétique pour acquérir la courbe de réponse brute, le premier capteur magnétique étant du même modèle (et donc présentant les mêmes caractéristiques fonctionnelles) que le second capteur magnétique, soit, selon une seconde possibilité de mise en œuvre, utiliser matériellement un seul et même capteur magnétique pour réaliser tout d'abord les courbes de réponse étalons puis, ultérieurement, acquérir la courbe de réponse brute. Ainsi, on comprend que le réglage du capteur magnétique sera mis en œuvre à partir de courbes de réponse étalons parfaitement adaptées pour ledit capteur magnétique. Le procédé sera donc particulièrement fiable.

Idéalement, les courbes de réponse étalons sont établies en faisant suivre au capteur magnétique une trajectoire standardisée identique par rapport à chaque objet de l'un des agencements prédéfinis et la trajectoire standardisée est de préférence normale à une portion de référence prédéfinie de la surface de l'objet. En sus, idéalement, lors de l'étape (a) d'acquisition d'une courbe de réponse brute, les positions successives du capteur sont situées sur cette même trajectoire standardisée. Les courbes de réponse brutes et les courbes de réponse étalons seront ainsi obtenues dans des conditions comparables, et seront ainsi aisément comparables entre elles, notamment lorsqu'il s'agira de déterminer à quelle courbe de réponse étalon rattacher la courbe de réponse brute pour obtenir la courbe de réponse corrigée, par exemple en identifiant quelle courbe de réponse étalon se superpose le mieux sur la courbe de réponse brute. Le procédé est ainsi fiable, simple et reproductible. Par exemple, dans le cas d'un bandage pneumatique, la trajectoire standardisée peut être une trajectoire radiale en éloignement par rapport à la surface externe de la bande de roulement du bandage pneumatique. À titre de second exemple, la trajectoire peut également être sensiblement radiale comme par exemple contenue dans un cône d'axe normal à la surface externe de la couche externe de l'objet et d'angle au sommet inférieur ou égal à 5 degrés, de préférence inférieur ou égal à 2 degrés.

Avantageusement, lors de l'étape (b), pour sélectionner une courbe de réponse étalon, un point d'inflexion P est identifié sur la courbe de réponse brute par l'unité de traitement de données. Par définition, en mathématiques, un point d'inflexion est un point où s'opère un changement de concavité d'une courbe plane. En un tel point, la tangente T traverse la courbe. Un point d'inflexion de la courbe de réponse brute (ainsi que la tangente à la courbe en ce point) est par exemple illustré en figure 2. Le point d'inflexion peut être déterminé de différentes façons. Une première façon consiste à calculer la dérivée seconde de la courbe de réponse brute pour identifier le point où cette dérivée seconde s'annule. Puis, la dérivée première est calculée en ce point ce qui correspond au point d'inflexion. Une deuxième façon consiste à considérer que le point d'inflexion se trouve toujours à la moitié de l'étendue des mesures de la courbe de réponse brute. Plus précisément, par « moitié de l'étendue des mesures de la courbe de réponse brute », il est entendu que le point d'inflexion se trouve à la mi-hauteur de la plage couverte par l'ensemble des signaux de mesure qui ont été renvoyés par le capteur et collectés lors de l'acquisition a) de la courbe de réponse brute dans les différentes positions occupées successivement par ledit capteur.

Puis, le coefficient directeur de la tangente à ladite courbe de réponse brute en ce point d'inflexion est calculé. La courbe de réponse étalon sélectionnée est celle qui présente un point d'inflexion dont la tangente T possède le coefficient directeur qui est le plus proche du coefficient directeur calculé pour la courbe de réponse brute. Par « plus proche », on entend que l'écart entre le coefficient directeur calculé pour la courbe de réponse étalon sélectionnée et le coefficient directeur calculé pour la courbe de réponse brute est minimal.

Selon un autre mode de réalisation, l'étape b) de sélection d'une courbe de réponse étalon est mise en œuvre par comparaison des coefficients d'une régression polynomiale de la courbe de réponse brute avec les coefficients de régressions polynomiales des courbes de réponse étalons. Plus précisément, une régression polynomiale, par exemple de degré 5, est calculée pour la courbe de réponse brute et les courbes de réponse étalons. Les coefficients de la régression de la courbe de réponse brute sont ensuite comparés aux coefficients des courbes de réponse étalons. La courbe de réponse étalon dont la régression présente des coefficients qui sont les plus proches des coefficients de la régression de la courbe de réponse brute est ainsi sélectionnée. Différentes techniques peuvent être employées pour déterminer quelle est la courbe de réponse étalon dont la régression présente des coefficients qui sont les plus proches des coefficients de la régression de la courbe de réponse brute.

Encore selon un autre mode de réalisation, l'étape b) de sélection d'une courbe de réponse étalon est mise en œuvre par traitement d'image. Plus précisément, le traitement d'image est appliqué pour identifier avec quelle courbe de réponse étalon la courbe de réponse brute présente une similitude maximale.

En fait, l'étape b) consiste à identifier la courbe de réponse étalon qui se rapproche le plus de la courbe de réponse brute. En effet, il est estimé que l'agencement particulier d'élément métallique et d'objet correspondant à la courbe de réponse brute correspond probablement à l'agencement particulier d'élément métallique et d'objet correspondant à la courbe de réponse étalon qui est identifiée comme étant la plus proche de la courbe de réponse brute. Le but est de pouvoir exploiter les données de la courbe de réponse étalon qui sont connues pour estimer une distance qui sépare l'élément métallique du capteur magnétique (avec lesquels la courbe de réponse brute a été obtenue).

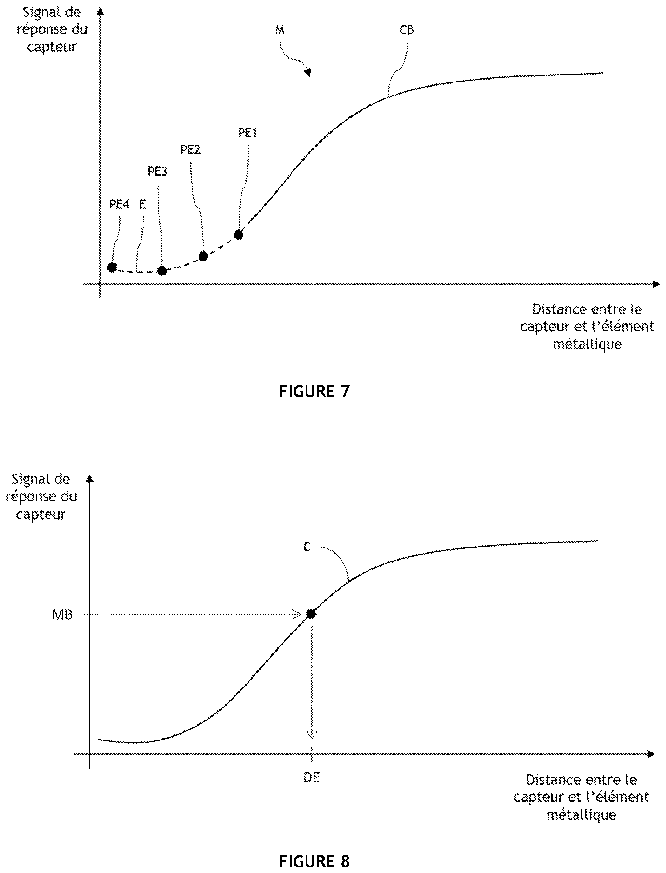

Selon un deuxième mode de réalisation illustré en figure 7, dit d'extrapolation, le modèle de courbe de correction est construit par extrapolation à partir de points constitutifs de la courbe de réponse brute. On comprend donc que le modèle de courbe de correction est constitué des points de la courbe de réponse brute ainsi que de points déterminés par extrapolation. L'extrapolation peut être mise en œuvre par divers moyens. Dans l'exemple illustré en figure 7, le modèle de courbe de correction M est construit à partir de la courbe de réponse brute CB (tracée en trait plein). Des points PE1, PE2, PE3 et PE4 sont obtenus par extrapolation et forment une courbe d'extrapolation E (tracée en pointillés). L'ensemble formé par la courbe de réponse brute CB et la courbe d'extrapolation E forme le modèle de courbe de correction M.

Par exemple, l'extrapolation mise en œuvre est une extrapolation polynomiale de sorte que le modèle de courbe de correction peut s'exprimer sous la forme d'un polynôme. Avantageusement, le modèle de courbe de correction peut s'exprimer sous la forme d'un polynôme de cinquième degré.

Alternativement, l'extrapolation est une symétrisation. Plus précisément, le modèle de courbe de correction est construit en symétrisant la courbe de réponse brute par rapport à un point d'inflexion de la courbe de réponse brute.

Puis, dans une étape c) dite de correction, une seconde courbe, dite « courbe de réponse corrigée », est établie en corrigeant la courbe de réponse brute à partir du modèle de courbe de correction.

Selon le mode de réalisation étalon, l'étape c) consiste à corriger la courbe de réponse brute à partir de la courbe de réponse étalon sélectionnée. Plus précisément, une fonction réciproque de la courbe de réponse étalon sélectionnée est appliquée au signal de réponse de la courbe de réponse brute.

En référence à la figure 8, ceci consiste, pour une ou une pluralité de valeurs de mesures de la courbe de réponse brute renvoyées par le capteur magnétique, à déterminer sur la courbe de réponse étalon C à quelle valeur en abscisses DE (donc à quelle distance effective DE séparant le capteur magnétique de l'élément métallique) correspond l'image ayant la valeur de la mesure brute MB renvoyée par le capteur magnétique. En d'autres termes, pour une certaine valeur de mesure brute MB renvoyée par le capteur magnétique, il est déterminé à quelle abscisse DE cette valeur de mesure brute correspond sur la courbe de réponse étalon et donc à quelle distance effective séparant le capteur magnétique de l'élément métallique elle correspond. Ainsi, la courbe de réponse corrigée est construite par correction de points de la courbe de réponse brute en fonction de la courbe de réponse étalon sélectionnée.

Puis, l'étape c) comprend de préférence une étape consistant à obtenir une courbe de réponse corrigée continue. En d'autres termes, l'étape c) comprend de préférence une étape consistant à relier les points déterminés de la courbe de réponse corrigée et donc à déterminer les points manquants de la courbe de réponse corrigée.

Pour cela, selon un mode de réalisation, une interpolation polynomiale, de préférence de troisième ou de cinquième degré, est mise en œuvre sur les points de la courbe de réponse corrigée. Ainsi, la courbe de réponse corrigée complète est obtenue. L'unité de traitement de données est donc de préférence configurée pour mettre en œuvre ce type d'interpolation.

Selon un autre mode de réalisation, en particulier dans le cas où l'unité de traitement de données ne serait pas configurée pour mettre en œuvre des interpolations de troisième ou cinquième degré, une méthode dite de « segment par segment » est utilisée. Plus précisément, une interpolation linéaire est mise en œuvre entre deux points de la courbe de réponse corrigée, de préférence deux points d'abscisse consécutive. L'interpolation linéaire est de préférence mise en œuvre à plusieurs reprises de sorte à relier entre eux un ensemble de points de la courbe de réponse corrigée.

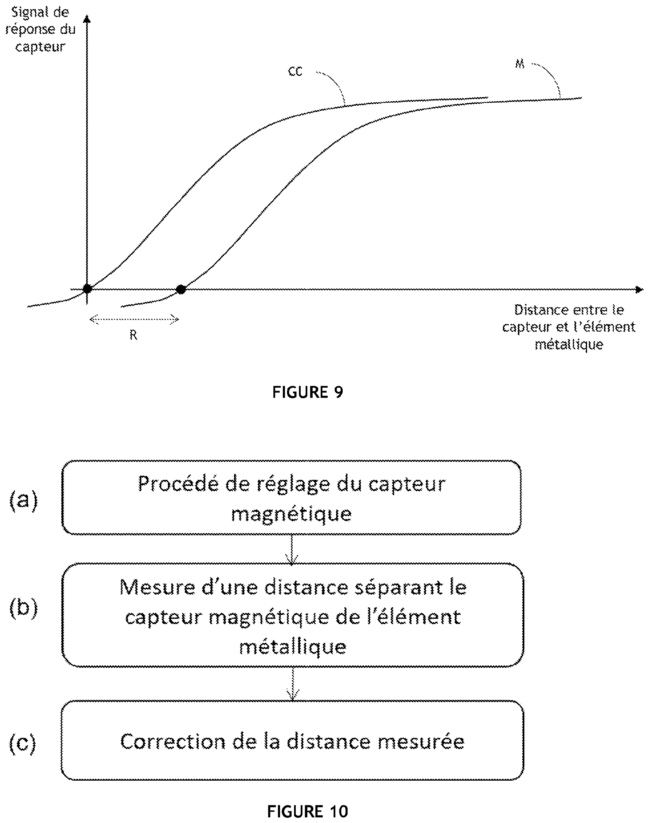

Selon le mode de réalisation d'extrapolation, à l'étape c), le modèle de courbe de correction est recalé. Plus précisément, en référence à la figure 9, il est tout d'abord déterminé sur le modèle de courbe de correction M la valeur de distance R qui sépare le capteur de l'élément métallique correspondant à un signal de réponse du capteur nul. En d'autres termes, on détermine à quelle abscisse le modèle de courbe de correction coupe l'axe des abscisses. Puis, le modèle de courbe de correction est décalé de la valeur d'abscisse R déterminée de sorte que le point de la courbe qui correspondait à une ordonnée nulle présente une abscisse nulle. La courbe de réponse brute est ainsi remplacée par le modèle de courbe de correction recalé. La courbe de réponse corrigée CC est ainsi obtenue.

Finalement, on comprend que la courbe de réponse corrigée CC correspond à la courbe de réponse brute à laquelle une extrapolation a été appliquée (pour donner le modèle de courbe de correction) et à laquelle un recalage a été appliqué.

À l'issue de l'étape c), le capteur magnétique est réglé. Le procédé permet donc un auto-réglage automatique du capteur magnétique qui est adapté à tout type d'objet à base de caoutchouc et donc, par exemple plus particulièrement, à tout type de bandage pneumatique. On peut ainsi obtenir des valeurs de distances effectives entre le capteur magnétique et l'élément métallique en fonction des positions du capteur magnétique vis-à-vis de l'objet.

En référence à la figure 10, il est à ce titre proposé un procédé de détermination de la distance effective qui sépare le capteur magnétique de l'élément métallique comprenant une étape a) consistant à régler le capteur magnétique comme décrit ci-avant.

Puis, dans une étape b), une distance séparant le capteur magnétique de l'élément métallique est mesurée par le capteur magnétique.

Enfin, dans une étape c), la distance mesurée est corrigée à partir de la courbe de réponse corrigée et une distance effective qui sépare le capteur magnétique de l'élément métallique est obtenue. Plus précisément, il est recherché à quelle abscisse correspond la distance mesurée sur la courbe de réponse corrigée. L'abscisse définie correspond à la distance effective.

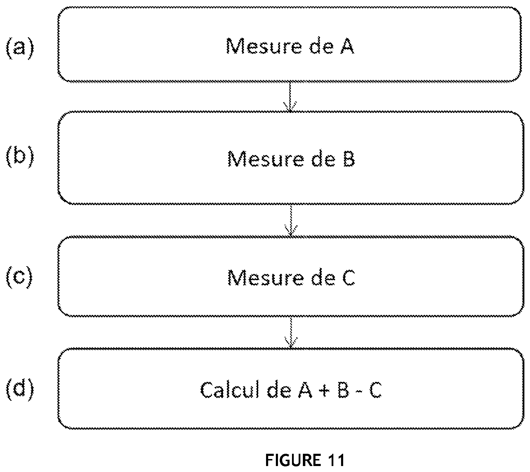

La valeur de distance effective obtenue permet de calculer la distance séparant l'élément métallique de la surface de l'objet à base de caoutchouc et donc l'épaisseur de la couche externe de l'objet, typiquement l'épaisseur de la bande de roulement dans le cas d'un bandage pneumatique. À ce titre, en référence aux figures 4 et 11, il est proposé un procédé de calcul de la distance séparant l'élément métallique 4 de la surface de l'objet 1 à base de caoutchouc dans lequel se trouve l'élément métallique 4 comprenant tout d'abord une étape a) de détermination d'une valeur A de distance effective entre le capteur magnétique 6 et l'élément métallique 4 comme expliqué ci-avant.

Puis, le procédé de calcul comprend une étape b) de mesure, par le système auxiliaire de mesure de distance 8, de la distance B entre le système auxiliaire de mesure de distance 8 et la surface de l'objet 1. En outre, dans une étape c), la distance C entre le système auxiliaire de mesure de distance 8 et le capteur magnétique 6 est déterminée. Plus précisément, la distance C correspond à la distance entre un point distal du système auxiliaire de mesure de distance 8 et un point distal du capteur magnétique 6. Par ailleurs, l'étape c) peut simplement être mise en œuvre par mesure manuelle ou encore de préférence par calcul automatique, si le système auxiliaire de mesure de distance 8 et le capteur magnétique 6 sont disposés sur des bras robots dont les positionnements sont connus et réglables.

Enfin, en étape d), la distance séparant l'élément métallique 4 de la surface de l'objet 1 est calculée par calcul de la formule *A + B - C*. En conséquence, l'épaisseur de la couche externe 2 de l'objet 1 qu'il serait nécessaire d'usiner peut être déterminée et maitrisée sans que l'outil 10 pour usiner atteigne l'élément métallique 4 ce qui pourrait endommager l'élément métallique 4 et l'outil 10.

Selon un autre mode de réalisation, il n'est pas nécessaire d'avoir recours à un système auxiliaire de mesure de distance 8 pour déterminer la distance effective qui sépare l'élément métallique 4 de la surface de l'objet 1. En effet, selon ce mode de réalisation, une distance séparant le capteur magnétique 6 de l'élément métallique 4 est mesurée par le capteur magnétique 6 lorsque le capteur magnétique 6 occupe la position au contact de la surface de l'objet 1. Puis, la distance mesurée est corrigée à partir de la courbe de réponse corrigée et la distance effective qui sépare le capteur magnétique 6 de l'élément métallique 4 et donc la distance effective qui sépare l'élément métallique 4 de la surface de l'objet 1 sont obtenues (celles-ci étant les mêmes étant donné que le capteur magnétique 6 occupe la position au contact de la surface de l'objet 1).

L'invention n'est pas limitée au mode de réalisation décrit et représenté aux figures annexées. Des modifications restent possibles, notamment du point de vue de la constitution des diverses caractéristiques techniques ou par substitution d'équivalents techniques, sans sortir pour autant du cadre de l'invention tel que défini par les revendications 1 à 16.

## Revendications

1. Procédé de réglage d'un capteur magnétique (6) configuré pour fournir, sous forme d'un signal de réponse, une mesure d'une distance qui sépare ledit capteur magnétique (6) d'un élément métallique (4) se trouvant dans un objet (1) à base de caoutchouc, tel qu'un élément métallique (4) de renfort présent dans un bandage pneumatique, ledit procédé comprenant :
- une étape (a) d'acquisition d'une première courbe, dite « courbe de réponse brute », au cours de laquelle on place successivement le capteur magnétique (6) en différentes positions par rapport à l'objet (1) de sorte que ledit capteur magnétique (6) se trouve successivement à différentes distances correspondantes de l'élément métallique (4), et l'on collecte, en chacune desdites positions, le signal de réponse renvoyé par ledit capteur magnétique (6), de manière à obtenir une courbe de réponse brute qui représente l'évolution du signal de réponse du capteur magnétique (6) en fonction de la distance qui sépare ledit capteur de l'élément métallique (4),
- une étape (b) de détermination, à partir de la courbe de réponse brute, d'un modèle de courbe de correction,
- une étape (c) de correction, au cours de laquelle on établit une seconde courbe, dite « courbe de réponse corrigée », en corrigeant la courbe de réponse brute à partir du modèle de courbe de correction,
selon une première alternative, le modèle de courbe de correction étant une courbe de réponse étalon et, lors de l'étape (b), à partir d'au moins une caractéristique de la courbe de réponse brute, on sélectionne la courbe de réponse étalon parmi un ensemble de courbes de réponse étalons préétablies qui représentent, chacune pour un agencement particulier prédéfini d'élément métallique (4) et d'objet (1), l'évolution du signal de réponse du capteur magnétique (6) en fonction de la distance qui sépare ledit capteur magnétique (6) de l'élément métallique (4) de l'agencement particulier considéré, et, lors de l'étape (c) de correction, on applique au signal de réponse de la courbe de réponse brute une fonction réciproque de la courbe de réponse étalon qui a été sélectionnée lors de l'étape (b) de sélection d'une courbe de réponse étalon,
selon une deuxième alternative, lors de l'étape (b), on construit le modèle de courbe de correction par extrapolation à partir de points constitutifs de la courbe de réponse brute, et, lors de l'étape (c), on détermine sur le modèle de courbe de correction la valeur de distance qui sépare le capteur magnétique (6) de l'élément métallique (4) correspondant à un signal de réponse du capteur magnétique (6) nul et on recale le modèle de courbe de correction de cette valeur de distance.

2. Procédé selon la revendication 1 **caractérisé en ce que**, selon la première alternative et lors de l'étape (b), on identifie un point d'inflexion sur la courbe de réponse brute, on calcule le coefficient directeur de la tangente à ladite courbe de réponse brute en ce point d'inflexion, et l'on sélectionne la courbe de réponse étalon qui présente un point d'inflexion dont la tangente possède le coefficient directeur qui est le plus proche du coefficient directeur calculé pour la courbe de réponse brute.

3. Procédé selon la revendication 1 **caractérisé en ce que**, selon la première alternative et lors de l'étape (b), on compare des coefficients d'une régression polynomiale de la courbe de réponse brute avec des coefficients de régressions polynomiales des courbes de réponse étalons, et l'on sélectionne la courbe de réponse étalon dont la régression polynomiale présente des coefficients qui sont les plus proches des coefficients de la régression polynomiale de la courbe de réponse brute.

4. Procédé selon la revendication 1 **caractérisé en ce que**, selon la première alternative et lors de l'étape (b), on met en œuvre un traitement d'image de la courbe de réponse brute et des courbes de réponse étalons et on sélectionne la courbe de réponse étalon présentant une similitude maximale avec la courbe de réponse brute.

5. Procédé selon l'une quelconque des revendications 1 à 4 **caractérisé en ce que**, selon la première alternative, la courbe de réponse étalon et/ou la courbe de réponse corrigée sont exprimées sous forme d'une fonction polynomiale du cinquième degré.

6. Procédé selon l'une quelconque des revendications 1 à 5 **caractérisé en ce que**, selon la première alternative, les courbes de réponse étalons sont établies à partir d'échantillons d'objets au sein desquels l'élément métallique (4), dont on souhaite mesurer la distance par rapport au capteur magnétique (6), a été mis à nu, et en prévoyant au moins une mesure de distance par le capteur magnétique (6) dans une position dans laquelle ledit capteur magnétique (6) se trouve au contact dudit élément métallique (4), et donc à distance effective nulle dudit élément métallique (4).

7. Procédé selon l'une quelconque des revendications 1 à 6 **caractérisé en ce que**, selon la première alternative, les courbes de réponse étalons sont établies en faisant suivre au capteur magnétique (6) une trajectoire standardisée identique par rapport à chaque objet (1) de l'un des agencements prédéfinis, ladite trajectoire standardisée étant de préférence normale à une portion de référence prédéfinie de la surface dudit objet (1), et **en ce que**, ultérieurement, lors de l'étape (a) d'acquisition de la courbe de réponse brute, les positions successives du capteur magnétique (6) sont situées sur cette même trajectoire standardisée.

8. Procédé selon la revendication 1 **caractérisé en ce que**, selon la deuxième alternative et lors de l'étape (b), on construit le modèle de courbe de correction par extrapolation polynomiale à partir de points constitutifs de la courbe de réponse brute.

9. Procédé selon la revendication 8 **caractérisé en ce que**, selon la deuxième alternative et lors de l'étape (b), on construit le modèle de courbe de correction en symétrisant la courbe de réponse brute par rapport à un point d'inflexion de la courbe de réponse brute.

10. Procédé selon l'une quelconque des revendications 1 à 9 **caractérisé en ce que**, lors de l'étape (a), le capteur magnétique (6) est déplacé d'une position à l'autre selon une trajectoire rectiligne qui suit une direction sensiblement normale à une portion choisie de la surface de l'objet (1).

11. Procédé selon l'une quelconque des revendications 1 à 10 **caractérisé en ce que**, lors de l'étape (a), le capteur magnétique (6) se trouve au contact de la surface de l'objet (1), à distance nulle de ladite surface de l'objet (1), dans l'une des différentes positions qui sont occupées successivement par ledit capteur magnétique (6).

12. Procédé selon l'une quelconque des revendications 1 à 11 **caractérisé en ce que**, lors de l'étape (a), les positions successivement occupées par le capteur magnétique (6) sont distantes les unes des autres d'un pas prédéterminé, de préférence égal ou inférieur à 1 mm, et plus préférentiellement égal ou inférieur à 0,2 mm.

13. Procédé de détermination de la distance effective qui sépare un capteur magnétique (6) d'un élément métallique (4) se trouvant dans un objet (1) à base de caoutchouc, le capteur magnétique (6) étant configuré pour fournir, sous forme d'un signal de réponse, une mesure d'une distance qui sépare le capteur magnétique (6) de l'élément métallique (4) comprenant les étapes de :
a) réglage du capteur magnétique (6) par mise en œuvre du procédé de réglage selon l'une des revendications 1 à 12 sur l'objet (1) ;
b) mesure d'une distance qui sépare le capteur magnétique (6) de l'élément métallique (4) sous la forme d'un signal de réponse ;
c) correction de la mesure de distance à partir de la courbe de réponse corrigée pour obtention de la distance effective qui sépare le capteur magnétique (6) de l'élément métallique (4).

14. Procédé de calcul de la distance séparant un élément métallique (4) de la surface d'un objet (1) à base de caoutchouc dans lequel se trouve l'élément métallique (4), comprenant des étapes de :
a) détermination d'une valeur « A » de distance effective entre un capteur magnétique (6) et l'élément métallique (4) par mise en œuvre du procédé de détermination selon la revendication 13, le capteur magnétique (6) étant configuré pour fournir, sous forme d'un signal de réponse, une mesure d'une distance qui sépare le capteur magnétique (6) de l'élément métallique (4) ;
b) mesure, par un système de mesure de distance (8), de la distance « B » entre le système de mesure de distance (8) et la surface de l'objet (1) ;
c) détermination de la distance « C » entre le système de mesure de distance (8) et le capteur magnétique (6) ;
d) calcul de l'épaisseur de gomme par calcul de la formule A+B- C.

15. Système de calcul de la distance séparant un élément métallique (4) de la surface d'un objet (1) à base de caoutchouc dans lequel se trouve l'élément métallique (4), ledit système comprenant un capteur magnétique (6) configuré pour mesurer une distance entre l'élément métallique (4) et le capteur magnétique (6), un système de mesure de distance (8) configuré pour mesurer une distance entre la surface de l'objet (1) et le système de mesure de distance (8) et une unité de traitement de données configurée pour mettre en œuvre le procédé de réglage selon l'une des revendications 1 à 12.

16. Machine d'usinage destinée à enlever du caoutchouc sur un objet (1) à base de caoutchouc dans lequel se trouve un élément métallique (4), ladite machine comprenant un outil d'usinage (10) de l'objet (1), une unité de commande de l'outil d'usinage (10) et le système de calcul selon la revendication 15, l'unité de commande communiquant avec le système de calcul pour commander l'outil d'usinage (10) en fonction de la distance calculée qui sépare l'élément métallique (4) de la surface de l'objet (1) à base de caoutchouc.

## Patentansprüche

1. Verfahren zum Einstellen eines Magnetsensors (6), der dazu ausgebildet ist, in Form eines Antwortsignals eine Messung eines Abstands zu liefern, der den Magnetsensor (6) von einem Metallelement (4) trennt, das sich in einem Objekt (1) auf Kautschukbasis befindet, wie z. B. ein in einem Luftreifen vorhandenes metallisches Verstärkungselement (4), das Verfahren umfassend:
- einen Schritt (a) des Erfassens einer ersten Kurve, "Rohantwortkurve" genannt, während dessen der Magnetsensor (6) nacheinander an verschiedenen Positionen in Bezug auf das Objekt (1) angeordnet wird, so dass sich der Magnetsensor (6) nacheinander in entsprechenden verschiedenen Abständen von dem Metallelement (4) befindet, und an jeder der Positionen das von dem Magnetsensor (6) zurückgesendete Antwortsignal erfasst wird, so dass eine Rohantwortkurve erhalten wird, die den Verlauf des Antwortsignals des Magnetsensors (6) in Abhängigkeit von dem Abstand, der den Sensor von dem Metallelement (4) trennt, darstellt,
- einen Schritt (b) des Bestimmens, ausgehend von der Rohantwortkurve, eines Korrekturkurvenmodells,
- einen Schritt (c) des Korrigierens, während dessen eine zweite Kurve, "korrigierte Antwortkurve" genannt, erstellt wird, indem die Rohantwortkurve ausgehend von dem Korrekturkurvenmodell korrigiert wird,
wobei gemäß einer ersten Alternative das Korrekturkurvenmodell eine Standardantwortkurve ist und bei dem Schritt (b) ausgehend von mindestens einem Merkmal der Rohantwortkurve die Standardantwortkurve aus einer Menge von zuvor erstellten Standardantwortkurven ausgewählt wird, die, jede für eine vordefinierte besondere Anordnung eines Metallelements (4) und eines Objekts (1), den Verlauf des Antwortsignals des Magnetsensors (6) in Abhängigkeit von dem Abstand, der den Magnetsensor (6) von dem Metallelement (4) der betreffenden besonderen Anordnung trennt, darstellen, und bei dem Schritt (c) des Korrigierens auf das Antwortsignal der Rohantwortkurve eine reziproke Funktion der Standardantwortkurve angewendet wird, die bei dem Schritt (b) des Auswählens einer Standardantwortkurve ausgewählt worden ist,
wobei gemäß einer zweiten Alternative bei dem Schritt (b) das Korrekturkurvenmodell durch Extrapolation ausgehend von Punkten, die Bestandteil der Rohantwortkurve sind, konstruiert wird und bei dem Schritt (c) an dem Korrekturkurvenmodell der Wert des Abstands, der den Magnetsensor (6) von dem Metallelement (4) trennt, bestimmt wird, der einem Antwortsignal des Magnetsensors (6) von null entspricht, und das Korrekturkurvenmodell um diesen Abstandswert justiert wird.

2. Verfahren nach Anspruch 1, **dadurch gekennzeichnet, dass** gemäß der ersten Alternative und bei dem Schritt (b) ein Wendepunkt auf der Rohantwortkurve identifiziert wird, die Steigung der Tangente an der Rohantwortkurve in diesem Wendepunkt berechnet wird und die Standardantwortkurve ausgewählt wird, die einen Wendepunkt aufweist, dessen Tangente die Steigung besitzt, die der für die Rohantwortkurve berechneten Steigung am nächsten kommt.

3. Verfahren nach Anspruch 1, **dadurch gekennzeichnet, dass** gemäß der ersten Alternative und bei dem Schritt (b) Koeffizienten einer polynomialen Regression der Rohantwortkurve mit Koeffizienten polynomialer Regressionen der Standardantwortkurven verglichen werden und die Standardantwortkurve ausgewählt wird, deren polynomiale Regression Koeffizienten aufweist, die den Koeffizienten der polynomialen Regression der Rohantwortkurve am nächsten kommen.

4. Verfahren nach Anspruch 1, **dadurch gekennzeichnet, dass** gemäß der ersten Alternative und bei dem Schritt (b) eine Bildverarbeitung der Rohantwortkurve und der Standardantwortkurven durchgeführt wird und die Standardantwortkurve ausgewählt wird, die eine maximale Ähnlichkeit mit der Rohantwortkurve aufweist.

5. Verfahren nach einem der Ansprüche 1 bis 4, **dadurch gekennzeichnet, dass** gemäß der ersten Alternative die Standardantwortkurve und/oder die korrigierte Antwortkurve in Form einer Polynomfunktion fünften Grades ausgedrückt werden.

6. Verfahren nach einem der Ansprüche 1 bis 5, **dadurch gekennzeichnet, dass** gemäß der ersten Alternative die Standardantwortkurven ausgehend von Proben von Objekten erstellt werden, in denen das Metallelement (4), dessen Abstand in Bezug auf den Magnetsensor (6) gemessen werden soll, freigelegt worden ist, und mindestens eine Abstandsmessung durch den Magnetsensor (6) in einer Position vorgesehen wird, in der sich der Magnetsensor (6) in Kontakt mit dem Metallelement (4) und somit in einem tatsächlichen Abstand von null von dem Metallelement (4) befindet.

7. Verfahren nach einem der Ansprüche 1 bis 6, **dadurch gekennzeichnet, dass** gemäß der ersten Alternative die Standardantwortkurven erstellt werden, indem man den Magnetsensor (6) einer identischen standardisierten Trajektorie in Bezug auf jedes Objekt (1) einer der vordefinierten Anordnungen folgen lässt, wobei die standardisierte Trajektorie vorzugsweise senkrecht zu einem vordefinierten Referenzabschnitt der Oberfläche des Objekts (1) verläuft, und dass anschließend, bei dem Schritt (a) des Erfassens der Rohantwortkurve, die aufeinander folgenden Positionen des Magnetsensors (6) auf dieser selben standardisierten Trajektorie gelegen sind.

8. Verfahren nach Anspruch 1, **dadurch gekennzeichnet, dass** gemäß der zweiten Alternative und bei dem Schritt (b) das Korrekturkurvenmodell durch polynomiale Extrapolation ausgehend von Punkten, die Bestandteil der Rohantwortkurve sind, konstruiert wird.

9. Verfahren nach Anspruch 8, **dadurch gekennzeichnet, dass** gemäß der zweiten Alternative und bei dem Schritt (b) das Korrekturkurvenmodell konstruiert wird, indem die Rohantwortkurve in Bezug auf einen Wendepunkt der Rohantwortkurve symmetrisiert wird.

10. Verfahren nach einem der Ansprüche 1 bis 9, **dadurch gekennzeichnet, dass** bei dem Schritt (a) der Magnetsensor (6) entlang einer geradlinigen Trajektorie, die einer im Wesentlichen senkrecht zu einem gewählten Abschnitt der Oberfläche des Objekts (1) folgt, von einer Position zur anderen bewegt wird.

11. Verfahren nach einem der Ansprüche 1 bis 10, **dadurch gekennzeichnet, dass** sich der Magnetsensor (6) bei dem Schritt (a) in einer der verschiedenen Positionen, die von dem Magnetsensor (6) nacheinander eingenommen werden, in Kontakt mit der Oberfläche des Objekts (1), in einem Abstand von null von der Oberfläche des Objekts (1), befindet.

12. Verfahren nach einem der Ansprüche 1 bis 11, **dadurch gekennzeichnet, dass** bei dem Schritt (a) die vom Magnetsensor (6) nacheinander eingenommenen Positionen voneinander durch eine vorbestimmte Schrittweite beabstandet sind, die vorzugsweise gleich oder kleiner 1 mm und noch bevorzugter gleich oder kleiner 0,2 mm ist.

13. Verfahren zur Bestimmung des tatsächlichen Abstands, der einen Magnetsensor (6) von einem Metallelement (4) trennt, das sich in einem Objekt (1) auf Kautschukbasis befindet, wobei der Magnetsensor (6) dazu ausgebildet ist, in Form eines Antwortsignals eine Messung eines Abstands, der den Magnetsensor (6) von dem Metallelement (4) trennt, zu liefern, umfassend die folgenden Schritte:
a) Einstellen des Magnetsensors (6) durch Durchführen des Verfahrens zum Einstellen nach einem der Ansprüche 1 bis 12 an dem Objekt (1);
b) Messen eines Abstands, der den Magnetsensor (6) von dem Metallelement (4) trennt, in Form eines Antwortsignals;
c) Korrigieren der Abstandsmessung ausgehend von der korrigierten Antwortkurve zum Erhalten des tatsächlichen Abstands, der den Magnetsensor (6) von dem Metallelement (4) trennt.

14. Verfahren zur Berechnung des Abstands, der ein Metallelement (4) von der Oberfläche eines Objekts (1) auf Kautschukbasis trennt, in dem sich das Metallelement (4) befindet, umfassend die folgenden Schritte:
a) Bestimmen eines Werts "A" für den tatsächlichen Abstand zwischen einem Magnetsensor (6) und dem Metallelement (4) durch Durchführen des Verfahrens zur Bestimmung nach Anspruch 13, wobei der Magnetsensor (6) dazu ausgebildet ist, in Form eines Antwortsignals eine Messung eines Abstands, der den Magnetsensor (6) von dem Metallelement (4) trennt, zu liefern;
b) Messen, durch ein Abstandsmesssystem (8), des Abstands "B" zwischen dem Abstandsmesssystem (8) und der Oberfläche des Objekts (1);
c) Bestimmen des Abstands "C" zwischen dem Abstandsmesssystem (8) und dem Magnetsensor (6);
d) Berechnen der Gummidicke durch Berechnen der Formel A+B-C.

15. Berechnungssystem zum Berechnen des Abstands, der ein Metallelement (4) von der Oberfläche eines Objekts (1) auf Kautschukbasis trennt, in dem sich das Metallelement (4) befindet, das System umfassend einen Magnetsensor (6), der dazu ausgebildet ist, einen Abstand zwischen dem Metallelement (4) und dem Magnetsensor (6) zu messen, ein Abstandsmesssystem (8), das dazu ausgebildet ist, einen Abstand zwischen der Oberfläche des Objekts (1) und dem Abstandsmesssystem (8) zu messen, und eine Datenverarbeitungseinheit, die dazu ausgebildet ist, das Verfahren zum Einstellen nach einem der Ansprüche 1 bis 12 durchzuführen.

16. Bearbeitungsmaschine, die dazu bestimmt ist, Kautschuk von einem Objekt (1) auf Kautschukbasis abzutragen, in dem sich ein Metallelement (4) befindet, die Maschine umfassend ein Bearbeitungswerkzeug (10) zur Bearbeitung des Objekts (1), eine Steuerungseinheit für das Bearbeitungswerkzeug (10) und das Berechnungssystem nach Anspruch 15, wobei die Steuerungseinheit mit dem Berechnungssystem kommuniziert, um das Bearbeitungswerkzeug (10) in Abhängigkeit von dem berechneten Abstand zu steuern, der das metallische Element (4) von der Oberfläche des Objekts (1) auf Kautschukbasis trennt.

## Claims

1. Method for adjusting a magnetic sensor (6) configured to supply, in the form of a response signal, a measurement of a distance separating said magnetic sensor (6) from a metal element (4) located in a rubber-based object (1), such as a metal reinforcing element (4) present in a pneumatic tyre, said method comprising:
- a step (a) of acquiring a first curve, referred to as the "raw response curve", during which the magnetic sensor (6) is successively placed in different positions relative to the object (1) so that said magnetic sensor (6) is successively at different corresponding distances from the metal element (4), and the response signal returned by said magnetic sensor (6) is collected in each of said positions, so as to obtain a raw response curve that shows the change in the response signal of the magnetic sensor (6) as a function of the distance separating said sensor from the metal element (4),
- a step (b) of determining a correction curve model on the basis of the raw response curve,
- a correction step (c), during which a second curve, referred to as the "corrected response curve", is determined by correcting the raw response curve on the basis of the correction curve model,
according to a first alternative, the correction curve model being a standard response curve and, during step (b), on the basis of at least one characteristic of the raw response curve, the standard response curve is selected from a set of predetermined standard response curves that each represent, for a predefined particular arrangement of metal element (4) and object (1), the change in the response signal of the magnetic sensor (6) as a function of the distance separating said magnetic sensor (6) from the metal element (4) of the particular arrangement under consideration, and, during the correction step (c), a reciprocal function of the standard response curve that was selected during step (b) of selecting a standard response curve is applied to the response signal of the raw response curve,
according to a second alternative, during step (b), the correction curve model is constructed by extrapolation from points forming the raw response curve, and, during step (c), the distance value separating the magnetic sensor (6) from the metal element (4) corresponding to a zero response signal of the magnetic sensor (6) is determined on the correction curve model and the correction curve model is shifted by this distance value.

2. Method according to Claim 1, **characterized in that**, according to the first alternative and during step (b), a point of inflection is identified on the raw response curve, the slope of the tangent to said raw response curve at this point of inflection is calculated, and the standard response curve that has a point of inflection the tangent of which has the slope closest to the slope calculated for the raw response curve is selected.

3. Method according to Claim 1, **characterized in that**, according to the first alternative and during step (b), coefficients of a polynomial regression of the raw response curve are compared with coefficients of polynomial regressions of the standard response curves, and the standard response curve the polynomial regression of which has coefficients that are closest to the coefficients of the polynomial regression of the raw response curve is selected.

4. Method according to Claim 1, **characterized in that**, according to the first alternative and during step (b), image processing is performed on the raw response curve and the standard response curves and the standard response curve having maximum similarity to the raw response curve is selected.

5. Method according to any one of Claims 1 to 4, **characterized in that**, according to the first alternative, the standard response curve and/or the corrected response curve are expressed in the form of a fifth-degree polynomial function.

6. Method according to any one of Claims 1 to 5, **characterized in that**, according to the first alternative, the standard response curves are determined on the basis of samples of objects in which the metal element (4) the distance from the magnetic sensor (6) of which is to be measured has been stripped, and by providing at least one distance measurement by the magnetic sensor (6) in a position in which said magnetic sensor (6) is in contact with said metal element (4), and therefore at zero actual distance from said metal element (4).

7. Method according to any one of Claims 1 to 6, **characterized in that**, according to the first alternative, the standard response curves are determined by moving the magnetic sensor (6) along an identical standardized trajectory relative to each object (1) of one of the predefined arrangements, said standardized trajectory preferably being normal to a predefined reference portion of the surface of said object (1), and **in that**, subsequently, during step (a) of acquiring the raw response curve, the successive positions of the magnetic sensor (6) are situated on this same standardized trajectory.

8. Method according to Claim 1, **characterized in that**, according to the second alternative and during step (b), the correction curve model is constructed by polynomial extrapolation from points forming the raw response curve.

9. Method according to Claim 8, **characterized in that**, according to the second alternative and during step (b), the correction curve model is constructed by symmetrizing the raw response curve relative to a point of inflection of the raw response curve.

10. Method according to any one of Claims 1 to 9, **characterized in that**, during step (a), the magnetic sensor (6) is moved from one position to another along a straight trajectory that follows a direction substantially normal to a selected portion of the surface of the object (1).

11. Method according to any one of Claims 1 to 10, **characterized in that**, during step (a), the magnetic sensor (6) is in contact with the surface of the object (1), at zero distance from said surface of the object (1), in one of the different positions that are successively occupied by said magnetic sensor (6).

12. Method according to any one of Claims 1 to 11, **characterized in that**, during step (a), the positions successively occupied by the magnetic sensor (6) are separated from each other by a predetermined spacing, preferably less than or equal to 1 mm, and more preferably less than or equal to 0.2 mm.

13. Method for determining the actual distance separating a magnetic sensor (6) from a metal element (4) located in a rubber-based object (1), the magnetic sensor (6) being configured to supply, in the form of a response signal, a measurement of a distance separating the magnetic sensor (6) from the metal element (4) comprising the steps of:
a) adjusting the magnetic sensor (6) by implementing the adjustment method according to one of Claims 1 to 12 on the object (1);
b) measuring a distance separating the magnetic sensor (6) from the metal element (4) in the form of a response signal;
c) correcting the distance measurement on the basis of the corrected response curve for obtaining the actual distance separating the magnetic sensor (6) from the metal element (4).

14. Method for calculating the distance separating a metal element (4) from the surface of a rubber-based object (1) in which the metal element (4) is located, comprising steps of:
a) determining an actual distance value "A" between a magnetic sensor (6) and the metal element (4) by implementing the determination method according to Claim 13, the magnetic sensor (6) being configured to supply, in the form of a response signal, a measurement of a distance separating the magnetic sensor (6) from the metal element (4);
b) measuring, using a distance measuring system (8), the distance "B" between the distance measuring system (8) and the surface of the object (1);
c) determining the distance "C" between the distance measuring system (8) and the magnetic sensor (6);
d) calculating the rubber thickness by calculating the formula A + B - C.

15. System for calculating the distance separating a metal element (4) from the surface of a rubber-based object (1) in which the metal element (4) is located, said system comprising a magnetic sensor (6) configured to measure a distance between the metal element (4) and the magnetic sensor (6), a distance measuring system (8) configured to measure a distance between the surface of the object (1) and the distance measuring system (8) and a data processing unit configured to implement the adjustment method according to one of Claims 1 to 12.

16. Machining apparatus intended to remove rubber from a rubber-based object (1) in which a metal element (4) is located, said apparatus comprising a tool (10) for machining the object (1), a control unit of the machining tool (10) and the calculation system according to Claim 15, the control unit communicating with the calculation system in order to control the machining tool (10) as a function of the calculated distance separating the metal element (4) from the surface of the rubber-based object (1).
